# EUROPEAN PATENT APPLICATION

(11) **EP 4 671 664 A1**
(43) Date of publication of application: **31.12.2025**
(21) Application number: 24185234.2
(22) Date of filing: 28.06.2024
(51) Int. Cl.: F28F 3/02, F28F 13/18, F28F 21/08, F28D 9/00, B01J 19/24, B01J 19/00, B01J 19/08, B01J 19/32, F28D 21/00

(54) **A FLUID HANDLING DEVICE**

(71) Applicant: Alfa Laval Corporate AB, 221 00 Lund (SE)
(72) Inventor: CHAKRABORTY, Debasish, DK-2300 COPENHAGEN (DK); WICTOR, Clemens, SE-222 35 LUND (SE); NILSSON, Mats, SE-226 47 LUND (SE)
(74) Representative: Alfa Laval Attorneys

(57) **Abstract**

The present invention relates to a fluid handling device adapted to modify a fluidic starting material. The device comprising at least a first plate, a second plate and a third plate stacked to form a plate package. The plate package comprising a first sealing encircling a first fluid channel and a second sealing encircling a second fluid. Each plate being provided with corrugations. Each fluid channel comprising an inlet volume, an outlet volume and a fluid distribution volume extending between the inlet volume and the outlet volume. The opposing plates in the fluid distribution volume being in contact with at least one substance. The substance being a substance contributing to a chemical modification of the starting material and/or a substance adapted to separate the starting material into at least two components. The first fluid channel and the second fluid channel being in fluid communication with each other.

## Description

The present invention relates to a fluid handling device, a method of modifying a fluidic starting material and a use, for providing the fluid handling device, of a plate.

### Introduction

Fluid handling devices play a critical role in various industries, including chemical-, pharma-automotive- and manufacturing industries. In a fluid handling device, the movement, control, and transfer of liquids and gases is facilitated. Efficient fluid handling is essential for the optimal performance of various processes. The fluid handling device can ensure that the fluid is handled in a way that is optimised in relation to the process that is intended to be applied to the fluid.

A particular variant of fluid handling devices serves the purpose of modifying a fluid chemically and/or physically. This may involve exposing the fluid to a substance adapted to contribute to a chemical modification of the starting material or adapted to separate the starting material into at least two components. By exposing the fluid to the substance in an optimal way, the modification of the fluid will be more efficient. In a chemical modification process the chemical constitution or structure of molecules is at least partly changed. The modification may include chemical reactions, f.ex. separation of specific molecules by capturing them to a coated surface or addition of specific molecules continuously to the fluid In the modification process catalytic coatings may be used to increase the rate of chemical reactions by catalytic coatings etc.

Fluid handling devices of different types are previously known, and some of the prior art documents are listed below.

EP 0 231 558 discloses an apparatus for the separation of individual constituents of flowing fluid mixtures by means of selectively permeable laminar material by pervaporation, gas permeation, reverse osmosis or ultra-filtration, consisting substantially of a stack of substantially rectangular laminar components of matching outer contours which is built up using commercially available blanks of plate heat exchangers, which components are pressed together between end plates by means of tie rods so as to be sealed at the edges and which have internal flat flow spaces and inlet and outlet channels located in the four corner regions. The stack has a plurality of double modules, each double module having a commercially available blank, a commercially available sealing means, a sieve plate, a membrane, a flat gasket, a planar solid distributor blank, a second flat gasket, another membrane, another sieve plate and a third flat gasket arranged one behind the other.

FR 2 645 965 discloses a device which comprises a stack of chromatographic modules, between which are interposed distribution elements intended to ensure, on the one hand, uniform distribution of the liquid to be chromatographed over the entry plate of each module, and, on the other hand, the removal of the chromatographed liquid.

JP 6310306 discloses a heat exchanger configured by alternately disposed resin parts (lower cover member, frame member, cylindrical members) and metallic parts (partitioning members).

JP 6324118 discloses a plate heat exchanger having a main body section made of polyphenylene sulphide resin and a case member made of metal.

JP 2004293895 discloses a plate heat exchanger having a metallic plate and a polymer resin frame member surrounding the metallic plate.

JP2008051390 discloses a heat exchanger consisting of synthetic resin plates and heat transfer plates made of metal.

US 4936954 discloses an apparatus for separating liquid mixtures by pervaporation. The apparatus is formed by a unitary stack of upright rectangular plates, diaphragms, and seals held together by tie rods. Each of the plates is formed with two upper and two lower corners formed with respective holes and each plate is formed inward of the respective holes with a corrugated central portion and the holes of the plates are aligned horizontally. Each diaphragm is sandwiched between two plates to form a cell having a pair of compartments separated by the respective diaphragm.

US 20090321338 discloses a chromatographic apparatus comprising a housing, a fluid inlet to the housing, a fluid outlet from the housing, an optional vent and a chromatographic packed bed in the housing. The chromatographic apparatus which is formed from one or a plurality of identical modules which can be joined together to effect fluid flow into the modules, fluid flow through the chromatographic packed bed of particles within the modules and fluid flow out from the modules. Each fluid inlet and fluid outlet surrounded by a gasket which extends above a flat outside surface of each module.

US 20020168308 discloses a modular, stackable, flow-through plate or channel reactor unit for continuous, low temperature, catalytic reactions of two separate process reaction streams. Typically, the first is an exothermic combustion process and the second, an endothermic reforming process. Each reactor unit comprises two separate sets of flow channels or slot-type reaction zones formed in flow plates located between spaced, thin metal, highly heat-conductive metal foil or platelet separator walls. Adjacent reactors in a stack including a common, medially located, biocatalytic separator plate, i.e., a separator plate having on opposed surfaces the same or different catalysts selected for the particular reaction taking place in the adjacent reactor zone. Each flow plate has a relieved medial area defining the reaction zone, the side walls of which are the catalyst coated separator platelets. A separator platelet thus separates two adjacent reaction zones, one on each side and functions to transfer heat from the combustion occurring at the catalyst surface in the combustion zone directly to the reforming catalyst coated on the opposed surface. The reaction zones may include structures such as grooved plates or packed spheres to direct the feedstock gases to the catalyst coated on the platelet surfaces.

US2004237303A1 discloses a catalytic reactor consists of a plurality of thin tray-like metal sheets each with a peripheral rim and arranged as a stack to define first gas flow channels between adjacent sheets, alternating with second gas flow channels between adjacent sheets, so as to ensure good thermal contact between gases in the first and the second gas flow channels. Each sheet and also defines at least four apertures for flow of gases, and tubes and seal apertures in one sheet to corresponding apertures in the adjacent sheet. The gas flows through the channels may be guided by corrugations and are preferably in counter-current in adjacent channels. Appropriate catalysts are coated onto the sheets and in the two gas flow channels. The reactor may be used in compact plant for steam/methane reforming.

Despite known solutions in the field, there is still room for improvements.

### Summary of the invention

Typically, it is desired that the contact surface area between the fluid and the substance is as large as possible as it will increase the amount of fluid which is exposed to the substance. At the same time it is desired to make the device as compact as possible. The fluid handling device should be designed to support the optimisation of the modification process of the media flowing through the device.

The object of the present invention is therefore to provide technologies which allow the contact surface area between the fluid and the substance to be as large as possible relative to the size of the device.

The above object is realized according to a first aspect of the present invention by a fluid handling device adapted to modify a fluidic starting material, the device comprising at least a first plate, a second plate and a third plate stacked to form a plate package, the plate package comprising a first sealing encircling a first fluid channel between the opposing first and second plates, and, a second sealing encircling a second fluid channel between the opposing second and third plates, each plate being provided with corrugations, each fluid channel comprising:
∘ an inlet volume defining an inlet porthole in at least one of the opposing plates and an outlet volume defining an outlet porthole in at least one of the opposing plates,
∘ a fluid distribution volume extending between the inlet volume and the outlet volume, the opposing plates in the fluid distribution volume being in contact with at least one substance being:
   - a substance contributing to a chemical modification of the starting material, such as a catalytic substance, and/or,
   - a substance adapted to separate the starting material into at least two components,
the first fluid channel and the second fluid channel being in fluid communication with each other.

The fluidic starting material can be any liquid or gaseous media which is flowable. The plates are typically pressed plates, such as heat exchanger plates. The plates are provided with corrugations for increasing the surface area of the plate, and/or, increasing turbulence of the fluid flowing through the device, and/or, providing contact with an opposing plate at the sealing. The corrugations can be formed in the fluid distribution volume. The corrugations can extend in the longitudinal direction, i.e. concurrent with the direction of flow of the fluid. Alternatively, the corrugations can extend in the transversal direction, i.e. transversal to the direction of flow of the fluid. Yet alternatively, the corrugations can form a chevron pattern. Further, the corrugations can form part of the sealing between the plates. Yet further, the corrugations can form a constriction at the outlet volume and/or inlet volume. During production this allows the substance to be introduced through the inlet port hole of a plate package without falling out through the outlet port hole. The starting material can be one fluid or a mixture of fluids. Fluids is understood to mean liquids, gases or mixtures thereof.

It is understood that the device may be formed by more than three plates and that fluid channels then are formed between opposing plates in the plate package. The fluid flows between the inlet volume and the outlet volume of each fluid channel. The inlet porthole is used for introducing the fluid into the fluid channel while the outlet porthole is used for removing the fluid from the fluid channel. The fluid distribution volume is located between the inlet volume and the outlet volume such that the fluid must flow through the fluid distribution volume when flowing between the inlet porthole and the outlet porthole. Typically, each plate in the fluid handling device has an inlet porthole and an outlet porthole, however, it is not necessarily the case.

The plates should be fluidly sealed together at the sealing of opposing plates such that the fluid cannot enter the fluid channel except though the inlet port in the inlet volume and cannot escape the fluid channel except though the outlet port in the outlet volume.

The substance being in contact with the opposing plates in the fluid distribution volume is preferably in contact with at least 50% of the plate surface in the fluid distribution volume, preferably 70%, more preferably 90%. The substance may be contributing to a chemical modification of the starting material can be a chemical having a certain defined chemical composition which can be used in a reaction involving changes in atoms or molecules. It can be e.g. a catalytic substance, which speeds up a chemical reaction, or lowers the temperature or pressure of a chemical reaction but is not consumed during the reaction. Alternatively, or additionally, the coated substance can be adapted to separate the starting material into at least two components. It can be e.g. a polyelectrolyte substance, which are polymers whose repeating units bear an electrolyte group. The device provides a large surface area for the fluidic starting material to come into contact with the coated substance.

According to a further embodiment of the first aspect, the substance the substance is coated on the opposing plates in the in the fluid distribution volume, and/or, comprised as or coated on a porous structure in contact with the opposing plates in the in the fluid distribution volume, the porous structure preferably comprising or consisting of foam, pellets, woven material, non-woven material and/or particels.

The fluid distribution volume of the plate being coated with a substance should be understood as the substance contacting or being connected to essentially the complete surface of the plate in the fluid distribution volume. It is further understood that the plates are typically coated on both sides of the plate such that opposing plate surfaces in the fluid channel have a coating, however plates provided at the end of the plate package can be coated on only one side. There should not exist any substantial gaps between the surface of the plate and the coated substance. In this way the fluid is directed to flow in the fluid channel between the coatings.

Alternatively, on in addition to the above, the substance can be consisting as or coated on a porous structure in contact with the opposing plates The porous structure can consist of or comprise a metal or ceramic. The porous structure may enhance turbulence and provide a similar effect as a corrugation in the plate. The fluid distribution volume can be flat when using a porous structure. Foam, pellets, woven material, non-woven material or particels can be used to provide a porous structure.

According to a further embodiment of the first aspect, the plate comprises or consists of metal, carbon fiber, ceramics, polymer or combinations thereof.

Typically, the plates are pressed metal plates as used in plate heat exchangers. This will allow a large surface area in relation to the material used for the plates. The thickness of the plate can be below 1mm. As no heat exchange is required between the fluid channels, it is also possible to use other materials such as mentioned above. Such plates can e.g. be molded instead of being pressed.

According to a further embodiment of the first aspect, the corrugations in opposing plates in the device are parallel and falling into each other in the fluid distribution volume and define a distance between each other, the distance preferably being 0,05-3 mm or more preferably 0,1-1mm.

By allowing the corrugations to fall into each other, the surface area of the plate can be increased and/or the turbulence of the fluid flowing through the device can be increased. The distance between the opposing plates in the plate interspace can also be held constant. A small distance between the plates increases the contact of the fluid with the surface of the plate and thus with the substance on the plate surface.

According to a further embodiment of the first aspect, wherein the first sealing and/or the second sealing comprises a gasket positioned between the opposing plates, the gasket preferably comprises or consists of rubber, polymer, graphite, klingersil, ceramic, plyllosilicate, phlogopite mica paper, fiber, metal, such as copper or gold, and/or and combinations thereof, the gasket preferably being positioned in a corrugation, the plates in the fluid distribution volume optionally being flat.

The corrugations on the plate can be provided in the sealing area for accommodating a gasket. In this way the plates can be made separable for easier cleaning and maintenance. The gaskets of the fluid handling device are configured for use at temperatures above or below 200°C. The plates in the fluid distribution volume are typically corrugated but can optionally being flat.

According to a further embodiment of the first aspect, the gasket is made of electrically insulating material and at least two of the plates comprise means for applying a voltage to the plate, preferably, one of the two plates being configured as anode and the other of the two plates being configured as cathode, or vice versa, for establishing an electric field between the two plates, alternatively, all plates being either anode or cathode..

Electrically insulating materials can preferably comprise or consist of rubber, polymer or similar nonconductive polymeric materials. It will allow an electrical filed between the plates, which will allow electrolytic reactions to occur with suitable electrolytic coatings. Alternatively, all plates being either anode or cathode for charged particles to stick to the plates.

According to a further embodiment of the first aspect, the sealing is formed as a permanent sealing, such as brazing, welding, adhesive bonding, and/or fusion bonding the two opposing plates together, preferably at the corrugations, the plates in the fluid distribution volume optionally being flat.

The plates can also be permanently fixated to each other by any of the above-mentioned methods to achieve a sturdier device capable of withstanding higher temperature. Preferably the plates are permanently sealed at corrugations of opposite plates facing each other for creating fluid channels. The substance can be applied before or after fixating the plates to each other. The plates in the fluid distribution volume are typically corrugated but can optionally being flat.

According to a further embodiment of the first aspect, the plates contact each other at contact points in the fluid distribution volume.

As the plates are contacting each other at the contact points, the distance between the plates in the distribution volume but outside the contact points can be ensured. Typically, a specific and constant distance between the plates in the distribution volume but outside the contact points is desired. This allows the flow area to be constant through the device. Typically, the contact points of opposing plates are not permanently fixated to each other as it is not needed for just maintaining the flow area, however, optionally the contact points opposing plates are permanently fixated to each other, e.g. by brazing, welding, adhesive bonding, and/or fusion bonding to allow the device to be sturdier to allow higher pressure to be applied.

According to a further embodiment of the first aspect, the inlet portholes and the outlet portholes are fluidly connected to both the first fluid channel and the second fluid channel within the plate package for allowing the fluidic starting material flowing on both sides of at least one of the plates.

The first fluid interspace and the second fluid interspace can be interconnected inside the plate package by appropriate channels and sealings in the fluid channels. The plate package needs to have only one inlet port and one outlet port accessible from the outside.

According to a further embodiment of the first aspect, the inlet porthole and the outlet porthole of the first plate are fluidly connected to only the first fluid channel within the plate package and the first porthole and the second porthole of the second plate are fluidly connected to only the second fluid channel within the plate package, the first fluid channel and the second fluid channel being in fluid communication outside the plate package.

The first fluid interspace and the second fluid interspace can be interconnected outside the plate package by appropriate piping. In this way the fluid channels can be connected in parallel. The plate package thus need at least to have four ports accessible from the outside.

According to a further embodiment of the first aspect, the first fluid channel and the second fluid channel being connected in series or in parallel.

Typically, the first fluid channel and the second fluid channel are connected in parallel, allowing the incoming fluid to distribute along the first fluid channel and the second fluid channel. However, it is also possible that the first and the second fluid channels are connected in series. In such case, an internal port of the second plate can be used for interconnecting the first fluid channel and the second interspace such that the fluid first flows through the first fluid channel and subsequently through the second fluid channel.

According to a further embodiment of the first aspect, a thermal insulation or a thermal cooling jacket is provided around the device.

Some chemical processes, such as catalytic processes, require specific temperatures of the fluid. By using thermal insulation or a thermal cooling jacket any thermal interaction with the surroundings can be reduced or eliminated, thus the temperature within the device can be better controlled. In particular, the temperature of the fluid can be held constant while flowing through the device.

According to a further embodiment of the first aspect, the substance thickness is about 100 µm.

100 µm thickness is typically appropriate for ensuring sufficient covering of the plates in the fluid distribution volume.

The above object is realized according to a second aspect of the present invention by a method of modifying a fluidic starting material, the method comprising:
providing a fluid handling device according to the first aspect of the present invention,
introducing the fluidic starting material to the device via the first porthole, whereby the same fluid flows on both sides of at least one of the plates,
modifying the fluidic starting material to a product within the fluid handling device without substantial heat exchange, and
recovering the product at the second porthole,

The above method according to the second aspect is preferably used in combination with any of the fluid handling devices according to the first aspect of the present invention.

The above object is realized according to a third aspect of the present invention by a use, for providing a fluid handling device according to the first aspect of the present invention, of a corrugated plate, the plate comprises:
∘ an inlet porthole and an outlet porthole,
∘ a fluid distribution area extending between the inlet porthole and the outlet porthole, the fluid distribution area being in contact with at least one substance, the substance being:
   - a substance adapted to contribute to a chemical modification of the starting material, such as a catalytic substance and/or,
   - a substance adapted to separate the starting material into at least two components, and
∘ a sealing area surrounding the inlet porthole, the outlet porthole and the fluid distribution area for interconnecting the plate with opposing plates via sealings at opposing sealing areas.

The plate according to the third aspect of the present invention is preferably used together with any of the fluid handling devices according to the first aspect of the present invention or method according to the second aspect of the present invention.

### Brief description of the drawings

Fig. 1 is a flow-chart of the carbon cycle by hydrogenation of CO₂ to CH₃OH.
Fig. 2 is a flow-chart of NH₃ cracking into H₂.
Fig. 3A is a schematic view of a fluid handling device for separating a fluid into components.
Fig. 3B is a cross-section view of a fluid handling device for separating a fluid into components.
Fig. 4A is a front view of a corrugated plate for a fluid handling device.
Fig. 4B is a side view of a gasketed fluid handling device.
Fig. 4C is a cut out view of a gasketed fluid handling device.
Fig. 5A is a front perspective view of a gasketed fluid handling device.
Fig. 5B is a side perspective view of a gasketed fluid handling device.
Fig. 5C is a perspective view of a gasketed fluid handling device with end plates.
Fig. 6A is a front perspective view of a permanenty sealed fluid handling device.
Fig. 6B is a rear perspective view of a permanenty sealed fluid handling device.
Fig. 7A is a further embodiment of a permanenty sealed fluid handling device.
Fig. 7B is a front perspective view of a corrugated plate for a permanenty sealed fluid handling device.
Fig. 8 is a further embodiment of a corrugated plate for a permanenty sealed fluid handling device.
Fig. 9A is a front perspective view of a permanenty sealed fluid handling device.
Fig. 9B is a rear perspective view of a permanenty sealed fluid handling device.
Fig. 10A is a is a cut out view of permanenty sealed fluid handling device.
Fig. 10B is a cut out view of a permanenty sealed fluid handling device.
Fig. 11A is a perspective view of a welded fluid handling device
Fig. 11B is a side view of a welded fluid handling device
Fig. 11C is a perspective view of a welded fluid handling device
Fig. 11D is a side view of a welded fluid handling device
Fig. 12A is a first flow configuration in a fluid handling device
Fig. 12B is a second flow configuration in a fluid handling device
Fig. 12C is third flow configuration in a fluid handling device
Fig. 12D is fourth flow configuration in a fluid handling device

### Detailed description of the drawings

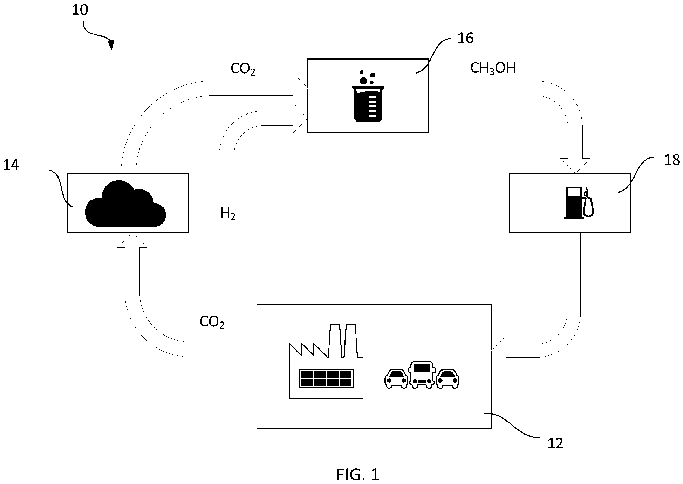

Fig. 1 is a flow-chart of the carbon cycle 10 by hydrogenation of CO₂ to CH₃OH. CO₂ is being produced by industry and transportation 12. CO₂ being captured in the atmosphere 14. A fluid handling device 16 with catalyst is used for converting CO₂ + H₂ to CH₃OH. CH₃OH (methanol) fuel 18 can be used by industry and transportation 12.

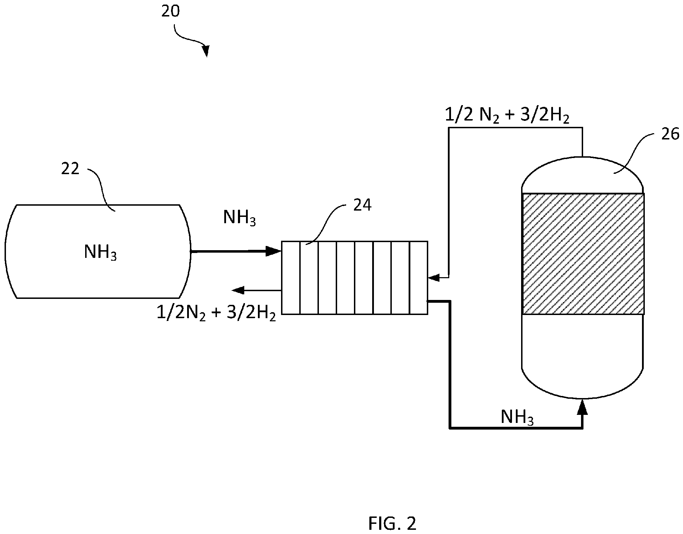

Fig. 2 is a flow-chart of NH₃ cracking into H₂. Cold NH₃ 22 being provided and supplied to a heat exchanger 24. The thereby heated NH₃ being provided to a fluid handling device 26 with a catalyst. NH₃ being cracked into 1/2 N₂ and 3/2 H₂. Hot 1/2 N₂ and 3/2 H₂ being provided to the heat exchanger 24 transferring heat to the cold NH₃.

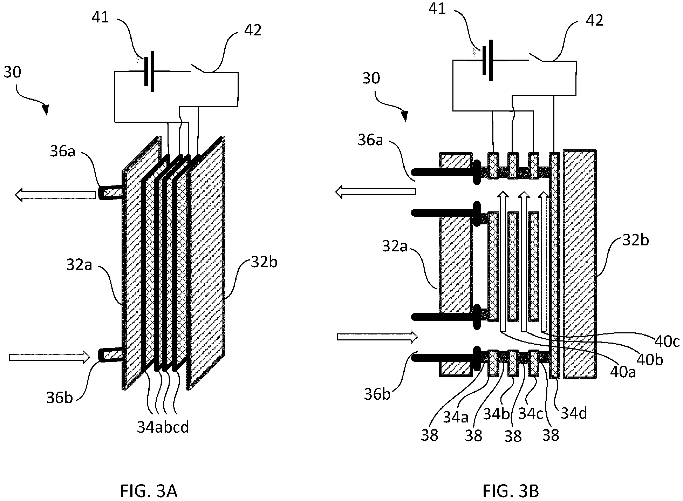

Fig. 3A is a schematic view of a fluid handling device 30 for separating a fluidic starting material into components. The fluid handling device 30 comprises a plate package comprising two end plates 32ab and four corrugated plates 34abcd stacked between the two end plates 32ab. The four corrugated plates 34abcd being coated with a substance. The substance being adapted to separate the starting material into at least two components.

The plate package of the fluid handling device 30 being provided with inlet porthole 36a for introducing fluid into the fluid handling device 30 and an outlet porthole 36b for removing fluid from the fluid handling device 30. The inlet porthole 36a and the outlet porthole 36b each extend though the end plate 32a and all of the corrugated plates 34abc except for the last corrugated plate 34d.

Fig. 3B is a cross-section view of a fluid handling device for separating a fluid into components. The end plate 32a and the corrugated plates 34abcd are sealed together by insulating gaskets 38 made of a material such as rubber or polymer. It is also possible that the last corrugated plate 34d is sealed to the end plate 32a if the corrugated plate 34d would be provided with a porthole. The gaskets 38 enclose fluid channels 40a 40b 40c between the corrugated plates 34abcd. The fluid channels 40a 40b 40c are connected to the inlet porthole 36a and the outlet porthole such that the fluid flowing through the inlet porthole 36a is divided between the fluid channels 40a 40b 40c and flows out via the outlet porthole 36b as shown by the arrows.

Every other corrugated plate 34ac being alternately connected to the cathode of a DC voltage source 40 and the anode of the DC voltage source 41. An electrical field can selectively be applied over the fluid channel 40a 40b 40c by operating a switch 42 to activate and deactivate the substance.

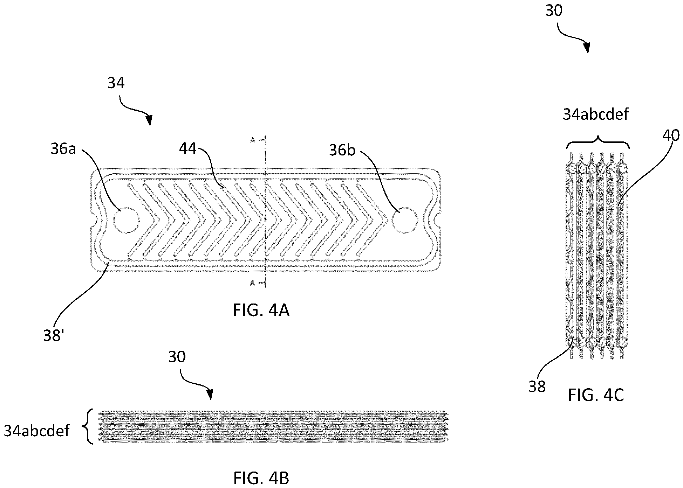

Fig. 4A is a front view of a corrugated plate 34 for a fluid handling device. The plate 34comprises an inlet port 36a and an outlet port 36b. The plate 34 further comprises a sealing 38 and chevron shaped corrugations 44.

Fig. 4B is a side view of the fluid handling device 30the.

Fig. 4C is a cut out view along A-A of the fluid handling device 30. The plates 34abcdef are separated by gaskets 38 to define fluid channels 40 between themselves.

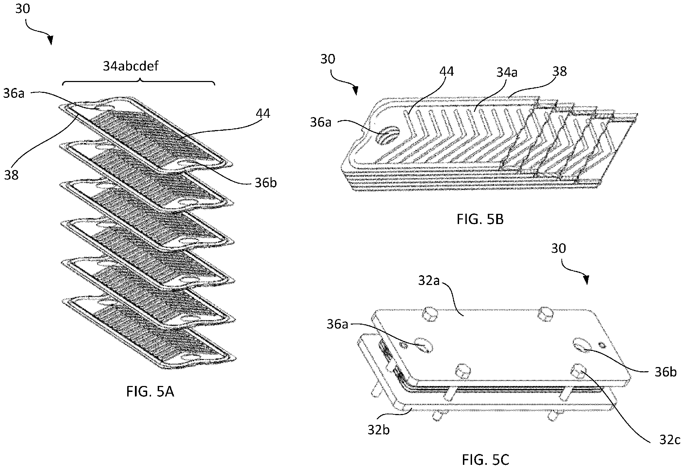

Fig. 5A is a front perspective view of a fluid handling device 30. The plates 34abcdef are stacked such that the corrugations 44 fall into each other.

Fig. 5B is a side perspective view of a the fluid handling device 30.

The gaskets 38 of the corrugated plates 34abcdef are positioned in gasket groove corrugations surrounding the plate 34a and seal between the opposing plates 34abcdef in the plate package.

Fig. 5C is a perspective view of the fluid handling device 30 with end plates 32a' 32b'. The end plates 32a 32b keep the plate package together by the use of tie bolts 32c. The plate package can be opened and the plates replaced by removing the tie bolts 32c

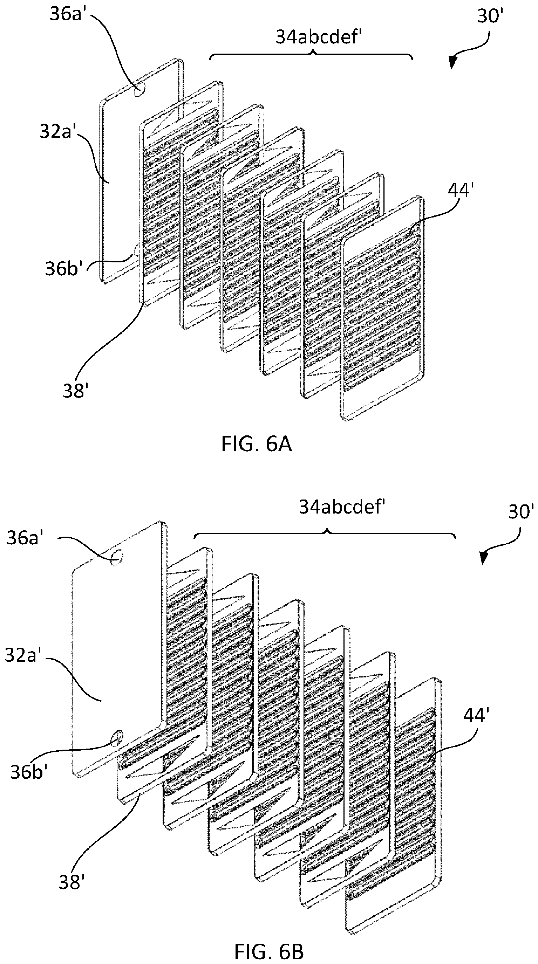

Fig. 6A is a front perspective view of an further embodiment of a fluid handling device 30'. The plates 34abcdef' are permanently sealed together by e.g. brazing and permanently sealed at the flanges 38'. It uses triangular shaped port holes 36a' 36b' for better distribution of the flow. The corrugations 44' extend transversal to the flow direction.

Fig. 6B is a rear perspective view of the further embodiment of the fluid handling device 30'. The plates 34abcdef' are stacked such that the corrugations 44' fall into each other.

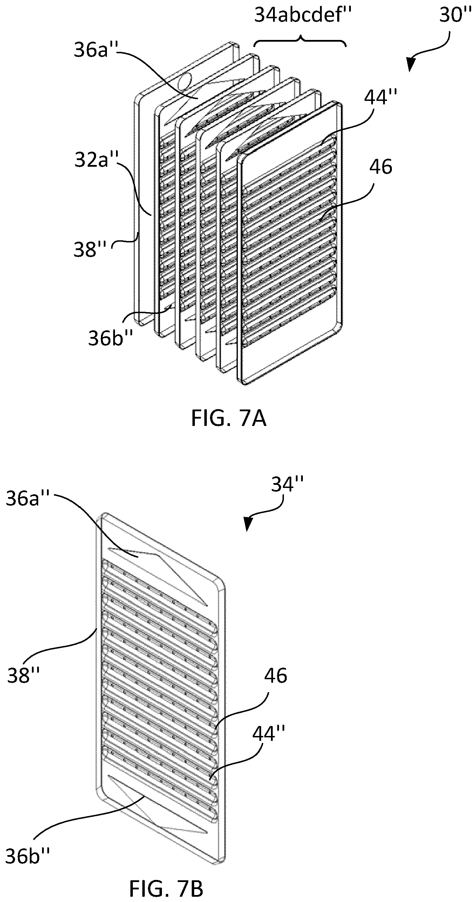

Fig. 7A is a yet further of a fluid handling device 30". The corrugations 44" of the plates 34abcdef" extend transversally to the flow and are provided with contact points 46, each an opposite contact point of an opposite plate. Thereby a specific distance between the plates 34abcdef" can be defined. They can optionally be permanently sealed, e.g. by brazing, to an opposite contact point of an opposite plate. This may allow the fluid handling device 30" to withstand higher pressures

Fig. 7B is a front perspective view of a corrugated plate for the fluid handling device 30". The corrugations 44" are provided with contact points 46 which keep the plates spaced apart at the corrugations 44" outside the contact points 46..

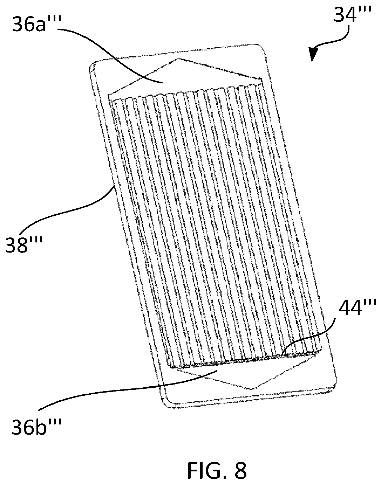

Fig. 8 is a yet further embodiment of a corrugated plate 34‴ for a fluid handling device. The corrugations extend longitudinally to the flow and define an opening at the port hole 36a‴ and a constriction at the port hole 36b'". This allows the substance for coating the plates to be introduced after permanently sealing the plates of the plate package and remain in the fluid channel without falling through.

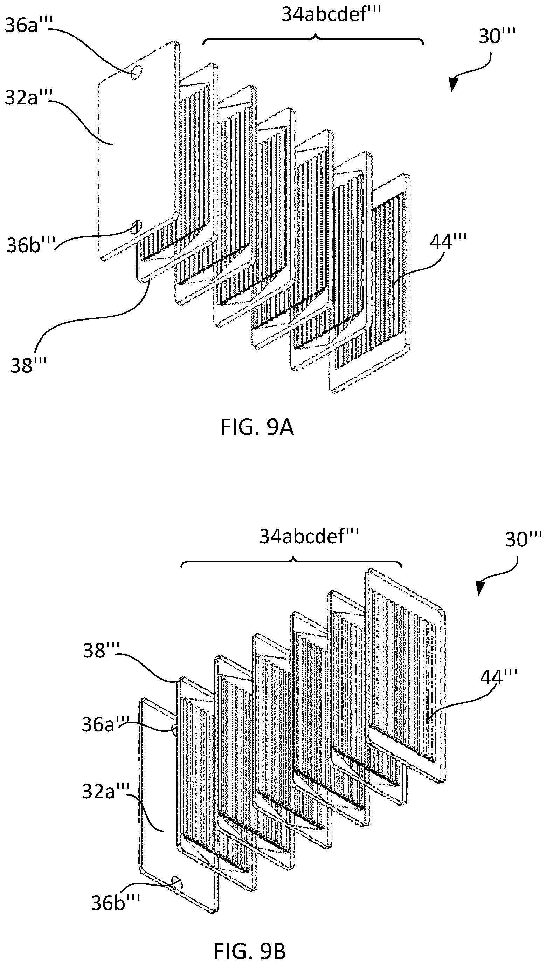

Fig. 9A is a front perspective view of a yet further embodiment of a fluid handling device 30'". The corrugations 44‴ extend extend longitudinally to the flow. The plates

Fig. 9B is a rear perspective view of the yet further embodiment of the fluid handling device 30'". The corrugations 44‴ of opposing plates fall into each other. The plates permanently sealed at the flanges 38'".

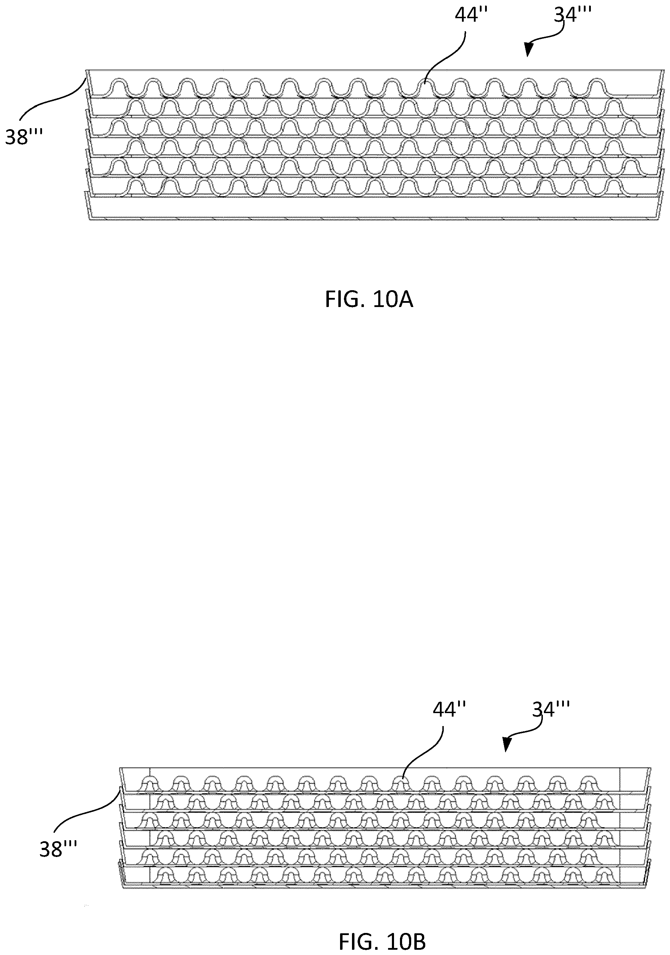

Fig. 10A is a is a cut out view of the fluid handling device 30'". The corrugations extend longitudinally to the flow and define an opening at one port hole. This allows the substance for coating the plates to be easily introduced after permanently sealing the plates of the plate package

Fig. 10B is a cut out view of a plate package for a fluid handling device 30‴. The corrugations extend longitudinally to the flow and define constriction at the other port hole. This allows the substance for coating the plates to remain after being introduced at the other port hole.

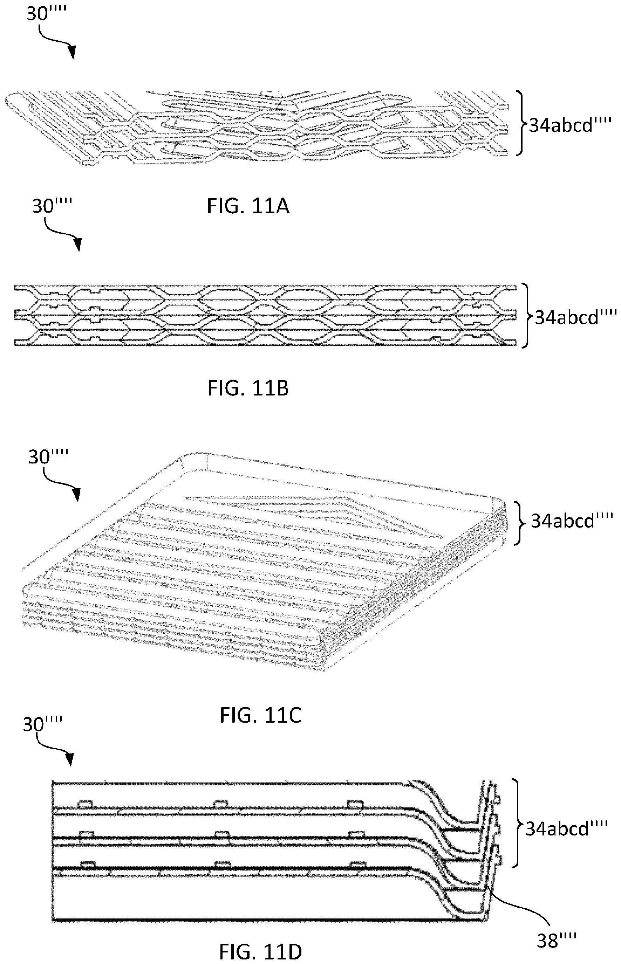

Fig. 11A is a perspective view of a welded fluid handling device 30ʺʺ

Fig. 11B is a side view of a welded fluid handling device 30ʺʺ

Fig. 11C is a perspective view of a welded fluid handling device 30ʺʺ

Fig. 11D is a side view of a welded fluid handling device 30ʺʺ. The plate 34abcdʺʺ are welded together at the flanges 38"".

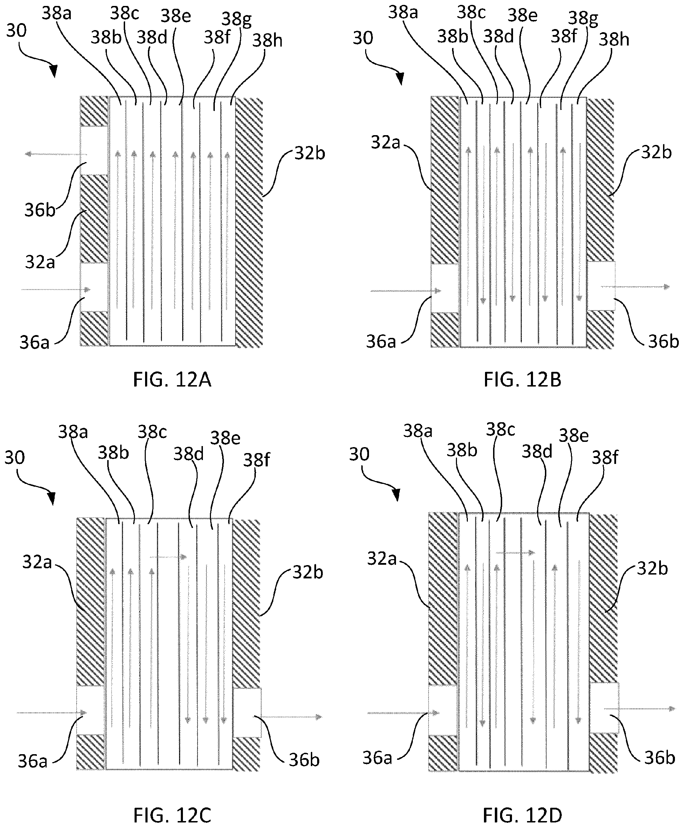

Fig. 12A is a first flow configuration in a fluid handling device 30. The fluid material is flowing in at the inlet port 36a, then flows in parallel in all flow channels 38abcdefgh and flows out at the outlet port 36b.

Fig. 12B is a second flow configuration in a fluid handling device 30. The fluid material is flowing in at the inlet port 36a, then flows in series in at least some, and possibly all, of the flow channels 38abcdefgh and flows out at the outlet port 36b. For example, flowing in at the inlet port 36a, then through flow channel 38a, then through flow channel 38b and flows out at the outlet port 36b. The flow channels 38a and 38b can be interconnected in series at the top. Similar, flow channels 38c and 38d, 38e and 38f, 38g and 38h may be interconnected at the top to realize four parallel flow channels.

Fig. 12C is third flow configuration in a fluid handling device 30. The fluid material is flowing in at the inlet port 36a, then flows in parallel in the flow channels 38abc, then in parallel in the flow channels 38def, and flows out at the outlet port 36b.

Fig. 12D is fourth flow configuration in a fluid handling device 30. The fluid material is flowing in at the inlet port 36a, then flows in series in the flow channels 38abc, then in parallel in the flow channels 38def, and flows out at the outlet port 36b.

## Claims

1. A fluid handling device adapted to modify a fluidic starting material, the device comprising at least a first plate, a second plate and a third plate stacked to form a plate package, the plate package comprising a first sealing encircling a first fluid channel between the opposing first and second plates, and, a second sealing encircling a second fluid channel between the opposing second and third plates, each plate being provided with corrugations, each fluid channel comprising:
∘ an inlet volume defining an inlet porthole in at least one of the opposing plates and an outlet volume defining an outlet porthole in at least one of the opposing plates,
∘ a fluid distribution volume extending between the inlet volume and the outlet volume, the opposing plates in the fluid distribution volume being in contact with at least one substance being:
- a substance contributing to a chemical modification of the starting material, such as a catalytic substance, and/or,
- a substance adapted to separate the starting material into at least two components,
the first fluid channel and the second fluid channel being in fluid communication with each other.

2. The fluid handling device according to claim 1, wherein the substance is coated on the opposing plates in the in the fluid distribution volume, and/or, comprised as or coated on a porous structure in contact with the opposing plates in the in the fluid distribution volume, the porous structure preferably comprising or consisting of foam, pellets, woven material, non-woven material and/or particels.

3. The fluid handling device according to any of the claims 1-2, wherein the plate comprises or consists of metal, carbon fiber, ceramics, polymer or combinations thereof.

4. The fluid handling device according to any of the claims 1-3, wherein the corrugations in opposing plates in the fluid channels are parallel and falling into each other in the fluid distribution volume and define a distance between each other, the distance preferably being 0,05-3 mm or more preferably 0,1-1mm.

5. The fluid handling device according to any of the claims 1-4, wherein the first sealing and/or the second sealing comprises a gasket positioned between the opposing plates, the gasket preferably comprises or consists of rubber, polymer, graphite, klingersil, ceramic, plyllosilicate, phlogopite mica paper, fiber, and/or metal such as copper or gold, the gasket preferably being positioned in a corrugation, the plates in the fluid distribution volume optionally being flat.

6. The fluid handling device according to claim 5, wherein the gasket is made of electrically insulating material and at least two of the plates comprise means for applying a voltage to the plate, preferably, one of the two plates being configured as anode and the other of the two plates being configured as cathode, or vice versa, for establishing an electric field between the two plates, alternatively, all plates being either anode or cathode.

7. The fluid handling device according to any of the claims 1-4, wherein the sealing is formed as a permanent sealing, such as brazing, welding, adhesive bonding, and/or fusion bonding the two opposing plates together preferably at the corrugations, the plates in the fluid distribution volume optionally being flat. (/)

8. The fluid handling device according to any of the claims 1-7, wherein the plates contact each other at contact points in the fluid distribution volume.

9. The fluid handling device according to any of the claims 1-8, wherein the inlet portholes and the outlet portholes are fluidly connected to both the first fluid channel and the second fluid channel within the plate package for allowing the fluidic starting material flowing on both sides of at least one of the plates.

10. The fluid handling device according to any of the claims 1-9, wherein the inlet porthole and the outlet porthole of the first plate are fluidly connected to only the first fluid channel within the plate package and the inlet porthole and the outlet porthole of the second plate are fluidly connected to only the second fluid channel within the plate package, the first fluid channel and the second fluid channel being in fluid communication outside the plate package.

11. The fluid handling device according to any of the claims 1-10, wherein the first fluid channel and the second fluid channel being connected in series or in parallel.

12. The fluid handling device according to any of the claims 1-11, wherein thermal insulation or a thermal cooling/heating jacket is provided around the device.

13. The fluid handling device according to any of the claims 1-12, wherein the substance thickness is up to about 100 µm.

14. A method of modifying a fluidic starting material, the method comprising:
providing a fluid handling device according to any of the preceding claims,
introducing the fluidic starting material to the device via the inlet porthole, whereby the same fluid flows on both sides of at least one of the plates,
modifying the fluidic starting material to a product within the fluid handling device without substantial heat exchange, and
recovering the product at the outlet porthole.

15. Use, for providing a fluid handling device according to any of the claims 1-13, of a corrugated plate, the plate comprises:
∘ an inlet porthole and an outlet porthole,
∘ a fluid distribution area extending between the inlet porthole and the outlet porthole, the fluid distribution area being in contact with at least one substance, the substance being:
- a substance contributing to a chemical modification of the starting material, such as a catalytic substance and/or,
- a substance adapted to separate the starting material into at least two components, and
∘ a sealing area surrounding the inlet porthole, the outlet porthole and the fluid distribution area for interconnecting the plate with adjacent plates via sealings at opposing sealing areas.
